# EUROPEAN PATENT APPLICATION

(11) **EP 4 760 799 A1**
(43) Date of publication of application: **17.06.2026**
(21) Application number: 25210942.6
(22) Date of filing: 24.10.2025
(51) Int. Cl.: H01M 4/133, H01M 4/134, H01M 4/38, H01M 10/0525

(54) **NEGATIVE ELECTRODE PLATE AND BATTERY**

(30) Priority: 11.12.2024 CN 202411820987
(71) Applicant: Zhuhai CosMX Battery Co., Ltd., Zhuhai, Guangdong 519180 (CN)
(72) Inventor: WANG, Hui, Zhuhai, Guangdong 519180 (CN); XUE, Jiachen, Zhuhai, Guangdong 519180 (CN); LIU, Chunyang, Zhuhai, Guangdong 519180 (CN)
(74) Representative: Murgitroyd & Company

(57) **Abstract**

The present invention relates to the technical field of batteries, and in particular relates to a negative electrode plate and a battery. The negative electrode plate comprises a negative electrode current collector and a negative electrode active coating layer on a surface of at least one side of the negative electrode current collector, wherein the negative electrode active coating layer comprises silicon-based particles; the number of the silicon-based particles in a region of 100 µm x 100 µm of the surface of the negative electrode active coating layer is a, 1 ≤ a ≤ 50; the average sphericity of the silicon-based particles is b, 0.66 ≤ b ≤ 1; and a and b satisfy: 1 ≤ a/b ≤ 67, thereby the degree of self-discharge of the battery can be reduced and the high-temperature storage performance of the battery can be improved.

## Description

### Technical Field

The present invention relates to the technical field of batteries, and in particular relates to a negative electrode plate and a battery.

### Background Art

With the rapid development of fields such as consumer electronics, electric vehicles, and energy storage power stations, using silicon-based materials with a higher theoretical lithium storage capacity instead of conventional graphite materials as the negative electrode of a battery is an important way to further improve the energy density of a lithium ion battery. However, the existing silicon-based particles are mainly irregular blocky-shaped particles with many edges and corners. Due to the relatively large specific surface area at the edges and corners, an SEI film formed at the edges and corners will be thickened and the size of the silicon-based particles will increase during the cycling of the lithium ion battery, which will easily make the silicon-based particles on the surface of the negative electrode plate protrude from the negative electrode active coating layer and puncture the separator, thereby leading to relatively serious self-discharge and affecting the high-temperature storage performance of the battery.

### Summary

In order to overcome the aforementioned problems in the prior art, the present invention provides a negative electrode plate and a battery comprising the negative electrode plate. By adjusting the ratio of the number to the average sphericity of silicon-based particles in a region of 100 µm x 100 µm of the surface of the negative electrode active coating layer, the degree of self-discharge of the battery can be reduced and the high-temperature storage performance of the battery can be improved.

A first aspect of the present invention provides a negative electrode plate comprising a negative electrode current collector and a negative electrode active coating layer on a surface of at least one side of the negative electrode current collector, wherein the negative electrode active coating layer comprises silicon-based particles; the number of the silicon-based particles in a region of 100 µm x 100 µm of the surface of the negative electrode active coating layer is a, 1 ≤ a ≤ 50; and the average sphericity of the silicon-based particles is b, 0.66 ≤ b ≤ 1.

A second aspect of the present invention provides a battery comprising the negative electrode plate.

By means of the above technical solution, the present invention has at least the following advantages over the prior art:
by adjusting the ratio of the number to the average sphericity of silicon-based particles in a region of 100 µm x 100 µm of the surface of the negative electrode active coating layer, the negative electrode plate provided by the present invention can reduce the degree of self-discharge of the battery and improve the high-temperature storage performance of the battery.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### Brief Description of the Drawings

FIG. 1 shows an SEM backscattering mode pattern of a surface of a negative electrode plate in an embodiment of the present invention.
FIG. 2 shows an SEM backscattering mode pattern of a cross-section of a negative electrode plate in an embodiment of the present invention.

Reference signs: 1. foil; 2. silicon-based particles; 3. carbon-based particles.

### Detailed Description of Embodiments

Hereinafter, specific embodiments of the present invention will be described in detail. It should be understood that the specific embodiments described herein are only used to illustrate and explain the present invention and are not used to limit the present invention.

In the present invention, the terms "battery", "lithium battery", "lithium ion battery" and "lithium ion secondary battery" all have the same meaning and refer to a lithium ion secondary battery, generally including an electrode assembly (e.g., a positive electrode plate, a negative electrode plate, and a separator), a container (housing) for accommodating the electrode assembly, and an electrolyte.

In the present invention, the term "a region of 100 µm x 100 µm" refers to any unit area of 100 µm x 100 µm in which the silicon-based particles are present on the surface of the negative electrode active coating layer.

A first aspect of the present invention provides a negative electrode plate comprising a negative electrode current collector and a negative electrode active coating layer on a surface of at least one side of the negative electrode current collector, wherein the negative electrode active coating layer comprises silicon-based particles; the number of the silicon-based particles in a region of 100 µm x 100 µm of the surface of the negative electrode active coating layer is a, 1 ≤ a ≤ 50; the average sphericity of the silicon-based particles is b, 0.66 ≤ b ≤ 1; and
a and b satisfy: 1 ≤ a/b ≤ 67.

By way of example, the value of a may be, for example, 1, 2, 4, 6, 8, 10, 15, 20, 25, 30, 35, 40, 42, 44, 46, 48, 50, or any point value in a range consisting of two of the above point values.

By way of example, the value of b may be, for example, 0.66, 0.67, 0.68, 0.69, 0.70, 0.75, 0.80, 0.85, 0.90, 0.92, 0.94, 0.96, 0.98, 1, or any point value in a range consisting of two of the above point values.

By way of example, the value of a/b may be, for example, 1, 2, 3, 5, 8, 10, 15, 20, 25, 30, 35, 40, 45, 50, 55, 60, 65, 66, 67, or any point value in a range consisting of two of the above point values.

In the present invention, when the average sphericity (b) of the silicon-based particles is adjusted and kept in a suitable range (0.66 ≤ b ≤ 1), the number (a) of the silicon-based particles on the surface of the negative electrode active coating layer can be adjusted at the same time, the negative electrode plate can be ensured to have a higher volume energy density, and excessive volume expansion can also be avoided, thereby improving the safety of the battery. The silicon-based particles with higher sphericity can be more evenly distributed on the surface of the negative electrode active coating layer, forming a more stable SEI film, which is helpful to reduce the volume change of the battery during cycling.

Further, when the number of silicon-based particles is increased in order to obtain a higher volume energy density of the negative electrode plate, if the sphericity of the silicon-based particles is not improved accordingly, more silicon-based particles will lead to excessive structures of edges and corners on the surface of the negative electrode active coating layer. These structures of edges and corners will lead to the growth and thickening of the SEI film during the cycling of the battery, which in turn increases the size of the silicon-based particles and may finally lead to the particles protruding from the space of the negative electrode active coating layer and puncturing the separator, thereby causing the serious self-discharge and deterioration of the high-temperature storage performance of the battery. On the contrary, if the number of the silicon-based particles is less, although the structures of edges and corners on the surface of the negative electrode active coating layer can be reduced, the volume energy density of the negative electrode plate is not obviously improved. Therefore, in the present invention, by controlling the number (a) of the silicon-based particles on the surface of the negative electrode active coating layer and the average sphericity (b) of the silicon-based particles to satisfy 1 ≤ a/b ≤ 67, the self-discharge coefficient of the battery can be effectively reduced and the high-temperature storage performance of the battery can be improved while ensuring the higher volume energy density of the negative electrode plate.

In the present invention, when a satisfies: 1 ≤ a ≤ 50; and b satisfies: 0.66 ≤ b ≤ 1, it is possible to avoid that when a < 1, less silicon-based particles are present in the negative electrode active coating layer, resulting in a lower volume energy density of the battery; and it is possible to avoid that when b < 0.66 and/or a > 50, the lower sphericity of the silicon-based particles on the surface of the negative electrode active coating layer and/or the excessive number of the silicon-based particles lead to a higher degree of self-discharge of the battery and deteriorate the high-temperature storage performance of the battery.

In some embodiments, a and b satisfy: 2 ≤ a/b ≤ 47; in an embodiment, a and b satisfy: 2 ≤ a/b ≤ 23;
and/or, 2 ≤ a ≤ 40; in an embodiment, a satisfies 2 ≤ a ≤ 20;
and/or, 0.85 ≤ b ≤ 1.

When the above range is further satisfied, the degree of self-discharge of the battery during cycling can be better reduced and the high-temperature storage performance of the battery can also be further improved, and the battery also has a higher volume energy density.

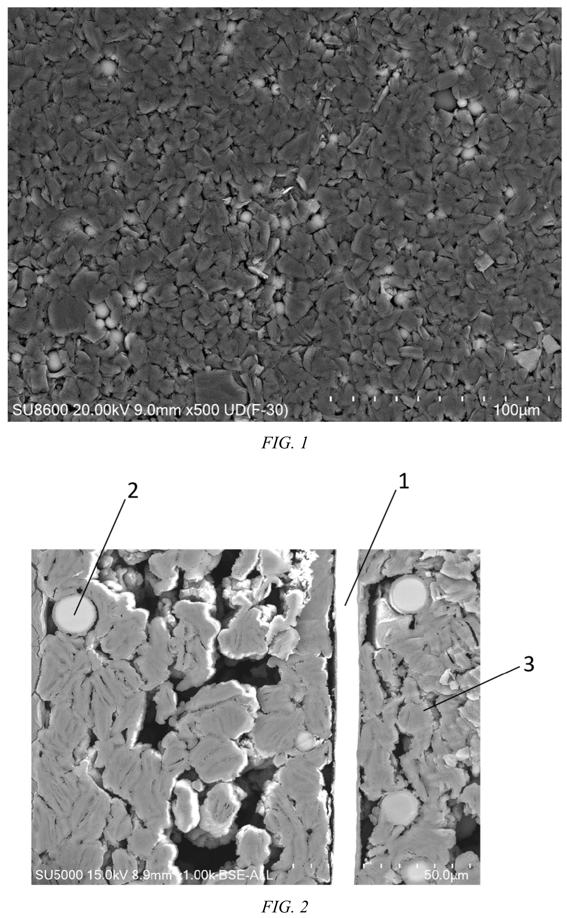

By way of example, the test method for the number a of the silicon-based particles in a region of 100 µm x 100 µm of the surface of the negative electrode active coating layer may comprises the following steps: firstly a lithium ion battery is disassembled, a negative electrode plate is removed, soaked with a dimethyl carbonate solvent and rinsed to remove a lithium salt and an electrolyte solvent from the negative electrode plate. After air-drying, it is observed by scanning electron microscope in a backscattering mode; in the backscattering mode of scanning electron microscope, the silicon-based particles show a brighter contrast as a whole, and the graphite particles are darker as a whole or brighter only at the edges (as shown in FIG. 1). Therefore, the imaging position is moved at a certain magnification (for example, 500 X), N non-overlapping 100 µm × 100 µm regions are randomly selected, and the number of the overall brighter particles in each region is count and finally averaged, so as to obtain the number a of the silicon-based particles in a region of 100 µm × 100 µm on the surface of the negative electrode active coating layer, where N ≥ 10 and N is an integer. It should be note that a silicon-based particle is considered to be a valid counting object if it is located exactly at the boundary of the 100 µm x 100 µm region and if and only if the projection area of the silicon-based particle in the 100 µm x 100 µm region reaches or exceeds 50%.

By way of example, the test method for the average sphericity b of the silicon-based particles may comprise the following steps: firstly a lithium ion battery is disassembled, a negative electrode plate is removed, soaked with a dimethyl carbonate solvent and rinsed to remove a lithium salt and an electrolyte solvent from the negative electrode plate. After air-drying, a cross-section of the negative electrode plate is obtained by means of argon ion cutting; in the backscattering mode of scanning electron microscope, the silicon-based particles show a brighter contrast, and the graphite particles are darker, so the image of each bright spot particle in the SEM backscattering mode photograph of the negative electrode plate at a certain magnification (such as 2500 X) can be calculated by an image processing software (such as Image Pro Plus) to obtain the perimeter and area of each silicon-based particle, and the perimeter equivalent radius r1 and area equivalent radius r2 of each particle can be calculated respectively. Then each particle has a sphericity of b = r2/r1, and then the number-weighted average of the sphericity of each particle is calculated, so as to obtain the average sphericity b of the silicon-based particles in the cross-section of the negative electrode plate.

In some embodiments, the image of the cross-section of the negative electron plate obtained by using the backscattering mode of the scanning electron microscope is shown in FIG 2, wherein the vertical strip with the highest brightness is foil 1, the particle which is brighter as a whole is silicon-based particle 2, and the particle which is darker or brighter at some edges is graphite particle 3.

In some embodiments, the Raman spectrum of the negative electrode active coating layer has a first characteristic peak at 470 cm⁻¹ - 520 cm⁻¹, a second characteristic peak at 1300 cm⁻¹ - 1400 cm⁻¹ and a third characteristic peak at 1520 cm⁻¹ - 1620 cm⁻¹; the ratio I of the intensity of the first characteristic peak to the intensity of the third characteristic peak is 0.001-0.2; and may be, for example, 0.001, 0.003, 0.005, 0.008, 0.01, 0.03, 0.05, 0.06, 0.07, 0.08, 0.09, 0.10, 0.12, 0.13, 0.14, 0.15, 0.16, 0.17, 0.18, 0.19, 0.2, or any point value in a range consisting of two of the above point values. In an embodiment, I is 0.01-0.15.

In the present invention, the first characteristic peak is a silicon peak, the more silicon-based particles on the surface of the negative electrode active coating layer, the stronger the intensity of the first characteristic peak; the second characteristic peak is the D peak, indicating the defects and degree of disorder of carbon in the surface of the negative electrode active coating layer, and the third characteristic peak is the G peak, indicating the crystal lattice vibration and degree of order of carbon in the surface of the negative electrode active coating layer. Because the degree of order of carbon in graphite is much higher than that in silicon-carbon, the intensity of the third characteristic peak can represent the number of graphite particles on the surface of the negative electrode active coating layer, so the ratio I of the intensity of the first characteristic peak to the intensity of the third characteristic peak can represent the proportion of the silicon-based particles on the surface of the negative electrode active coating layer. The higher the I value, the greater the proportion of silicon-based particles. When the I value further meets the above range, the surface of the negative electrode active coating layer has a suitable proportion of silicon-based particles, which can make the negative electrode plate have a higher volume energy density, improve the self-discharge of the battery, and improve the high-temperature storage performance and rapid discharge capability of the battery. In addition, it is avoided that when I < 0.001, the volume energy density of the battery is lower due to the lower proportion of the silicon-based particles on the surface of the negative electrode active coating layer, or the silicon-based particles gather at the bottom of the active coating layer, such that the expansion stress of lithium intercalation of the silicon-based particles is concentrated on the bottom, which leads to the fracture of the current collector foil, thereby causing irreversible loss of the battery capacity; and it is avoided that when I > 0.2, when lithium intercalation volume expansion occurs, it is more likely to squeeze the separator and cause self-discharge duo to the too large proportion of the silicon-based particles on the surface of the negative electrode active coating layer. At the same time, the silicon-based particles are more fully in contact with the electrolyte, such that the side reactions are intense, deteriorating the cycling and high-temperature storage performance of the battery.

In some embodiments, the negative electrode plate has a compacted density of 1.25 g/cm³ - 1.9 g/cm³, and may be, for example, 1.25 g/cm³, 1.3 g/cm³, 1.4 g/cm³, 1.5 g/cm³, 1.6 g/cm³, 1.7 g/cm³, 1.8 g/cm³, 1.85 g/cm³, 1.9 g/cm³, or any point value in a range consisting of two of the above point values. In an embodiment, the negative electrode plate has a compacted density of 1.4 g/cm³ - 1.8 g/cm³. When the silicon-based particles with higher sphericity are rolled, the rolling pressure can be dispersed more evenly, and the integrity of the particles can be maintained, such that the negative electrode plate can have a higher compacted density. When the compacted density of the negative electrode plate satisfies the above range, the volume energy density of a lithium ion battery can be further improved, such that the battery has both higher volume energy density and better rapid discharge capability. In addition, it is also possible to improve the problem that the specific surface area of the silicon-based particles increases and side reactions increase due to the breakage of the silicon-based particles during the cycling of the battery. When the negative electrode plate has a compacted density of < 1.25 g/cm³, the areal density of the negative electrode plate is lower and the volume energy density of the lithium ion battery is lower; and when the negative electrode plate has a compacted density of > 1.9 g/cm³, the pore volume remaining inside the negative electrode plate is less, which easily leads to poorer contact between some active material particles and the electrolyte, thereby affecting the rapid discharge capacity of the battery.

By way of example, the method for determining the compacted density of the negative electrode plate may comprise the following steps: a lithium ion battery is disassembled, a negative electrode plate is removed, soaked with dimethyl carbonate and rinsed. After air-drying, the foil thickness at several points in an empty foil area where active materials are not coated on both sides is measured with a micrometer and the average thickness of the foil is calculated, and then the thickness at several points in the double-sided coated area is measured, so as to calculate the thickness of the negative electrode active coating layer. Then, several small wafers with a diameter of 12 mm are cut in the empty foil area and the double-sided coated area respectively with a slicer, and the average masses of the empty foil small wafer and the double-sided coated small wafer are weighed, so as to obtain the mass of the single-sided negative electrode active coating layer on the small wafer. Then, the compacted density of the negative electrode active coating layer on the negative electrode plate is calculated according to the area of the small wafer and the thickness of the negative electrode active coating layer.

In some embodiments, the mass content of the silicon-based particles in the negative electrode active coating layer is 2%-95%, and may be, for example, 2%, 4%, 6%, 8%, 10%, 20%, 30%, 40%, 50%, 60%, 70%, 80%, 90%, 91%, 92%, 93%, 94%, 95%, or any point value in a range consisting of two of the above point values. In an embodiment, the mass content of the silicon-based particles in the negative electrode active coating layer is 5%-90%. Because the silicon-based particles have higher specific capacity, when the mass content of the silicon-based particles in the negative electrode active coating layer satisfies the above range, the volume energy density of the battery can be improved. If the content of the silicon-based particles is < 2%, the silicon content in the silicon-based particles is less, and the volume energy density of the battery is lower; if the content of the silicon-based particles is > 95%, the content of a carbon-based material in the negative electrode plate is less, which leads to lower conductivity and poorer rapid discharge capability of the lithium ion battery.

By way of example, the method for determining the mass content of the silicon-based particles in the negative electrode active coating layer may comprise the following steps: a lithium ion battery is disassembled, a negative electrode plate is removed, soaked with dimethyl carbonate and rinsed. After air-drying, in an SEM backscattering mode, at least 5 silicon-based particles are selected, the percentage silicon content of each silicon-based particle is obtained by an EDS dot scan mode, and the average percentage silicon content of the silicon-based particles is calculated. Then the air-dried negative electrode plate is treated at a high temperature of 400°C for 2 h (such as tube furnace in a nitrogen or argon atmosphere), and the negative electrode active material layer can be peeled off from the current collector, so as to collect the negative electrode active material. In the measurement of the content of silicon, a thermogravimetric analyzer (e.g., a TGA 550 thermogravimetric analyzer) is used, and the amount of a sample for measurement is 5 mg-15 mg; and the temperature is increased from room temperature to 900°C at a heating rate of 10°C/min in an air or oxygen atmosphere, and then maintained at 900°C for 40 min, thereby allowing non-silicon components in the negative electrode active material layer to be volatilized while the silicon is fully oxidized to silicon dioxide. The content in percentage by weight at the end of the entire measurement process represents the ash content of the negative electrode active coating layer; and by dividing the value of the ash content by the molar mass of silicon dioxide and then multiplying by the molar mass of silicon, the content in percentage of silicon element in the negative electrode active coating layer is obtained. The mass content of the silicon-based particles in the negative electrode active coating layer can be calculated from the content in percentage of the silicon element and the average silicon content of the silicon-based particles.

In some embodiments, the silicon-based particles comprise at least one of elemental silicon, silicon-carbon, silicon-oxygen, and a silicon alloy. In an embodiment, the silicon-based particles comprise silicon-carbon, the structure of which is a porous carbon deposited silicon material (the silicon material comprises at least one of elemental silicon, a silicon-carbon compound, a lithium-silicon compound and a silicon-oxygen compound), specifically, the silicon-carbon comprises a skeleton, which comprises a porous carbon skeleton body and a silicon material, and the porous carbon skeleton body has pores, and the silicon material fills at least part of the pores of the porous carbon skeleton body.

In some embodiments, the negative electrode active coating layer further comprises carbon-based particles; the ratio D1/D2 of the average particle size D1 of the carbon-based particles to the average particle size D2 of the silicon-based particles is 1-5, and the value of D1/D2 may be, for example, 1, 1.5, 2, 2.5, 3, 3.5, 4, 4.5, 5, or any point value in a range consisting of two of the above point values. In an embodiment, D1/D2 is 1.1 - 2.5.

When the average particle size D2 of the silicon-based particles and the average particle size D1 of the carbon-based particles further satisfy the above proportional relationship, the carbon-based particles can quickly adapt to the pressure due to their good elasticity during the rolling process. With an appropriate particle size ratio, a closer contact interface can be formed between the silicon-based particles and carbon-based particles, which reduces the pores and defects of the negative electrode active coating layer. The formed negative electrode active coating layer is also more uniform and flat, which is also helpful to form a more uniform and stable SEI film and improve the interface stability, thereby further reducing the self-discharge of the battery, improving the high-temperature storage performance of the battery, and enabling the battery to have a higher volume energy density. Moreover, on the one hand, it is avoided that when D1/D2 < 1, the particle size of the silicon-based particles is too large or the particle size of the carbon-based particles is too small, and the larger silicon-based particles easily protrude from the range of the negative electrode active coating layer to cause damage to the separator and affect the self-discharge and high-temperature storage performance of the battery, while the smaller carbon-based particles are more likely to have side reactions with the electrolyte during charging and discharging due to their larger specific surface area, resulting in poorer high-temperature storage performance of the battery and accelerated attenuation of the cycle retention rate; on the other hand, it is also avoided that when D1/D2 > 5, the particle size of the silicon-based particles is too small or the particle size of the carbon-based particles is too large, and the specific surface area of too small silicon-based particles is also larger, the silicon-based particle is also easy to have side reactions with the electrolyte, affecting the high-temperature storage performance and cycling performance of the battery. The lithium ion diffusion path at the core of carbon-based particles with larger particle size is too long, which makes the rapid discharge capacity of the battery poorer.

In some embodiments, the average particle size D1 of the carbon-based particles is 8 µm -20 µm, and D1 may be, for example, 8 µm, 9 µm, 10 µm, 12 µm, 14 µm, 16 µm, 18 µm, 19 µm, 20 µm, or any point value in a range consisting of two of the above point values. In an embodiment, D1 is 10 µm -18 µm;
and/or, the average particle size D2 of the silicon-based particles is 4 µm -20 µm, and D2 may be, for example, 4 µm, 5 µm, 6 µm, 7 µm, 8 µm, 9 µm, 10 µm, 11 µm, 12 µm, 15 µm, 18 µm, 20 µm, or any point value in a range consisting of two of the above point values. In an embodiment, D2 is 6 µm -11 µm.

When the average particle size D1 of the carbon-based particles and/or the average particle size D2 of the silicon-based particles further satisfy the above range, the volume energy density of the battery can be further improved and the battery can have lower self-discharge coefficient and better high-temperature storage performance.

In the present invention, "average particle size" refers to the average geometric diameter of several particles, which is obtained, for example, by measuring several particles, for example, more than a dozen particles or dozens of particles can be measured to obtain the average geometric diameter.

By way of example, the method for determining the average particle size of the silicon-based particles and the average particle size of the carbon-based particles in the negative electrode active coating layer may comprise the following steps: firstly a lithium ion battery is disassembled, a negative electrode plate is removed, soaked with a dimethyl carbonate solvent and rinsed to remove a lithium salt and an electrolyte solvent from the negative electrode plate. After air-drying, it is observed by scanning electron microscope in a backscattering mode; in the backscattering mode of scanning electron microscope, the maximum diameters of 50 silicon-based particles (particles with brighter contrast) and 50 carbon-based particles (particles with darker contrast) are randomly measured, respectively, and the arithmetic mean values of the measured maximum diameters of 50 silicon-based particles and 50 carbon-based particles are calculated respectively, and the results obtained are the average particle sizes of the silicon-based particles and the carbon-based particles.

In some other embodiments, the Dv50 of the carbon-based particles is 8 µm - 20 µm, and may be, for example, 8 µm, 9 µm, 10 µm, 12 µm, 14 µm, 16 µm, 18 µm, 19 µm, 20 µm, or any point value in a range consisting of two of the above point values;
and/or, the Dv50 of the silicon-based particles is 4 µm -20 µm, and may be, for example, 4 µm, 5 µm, 6 µm, 7 µm, 8 µm, 9 µm, 10 µm, 11 µm, 12 µm, 15 µm, 18 µm, 20 µm, or any point value in a range consisting of two of the above point values.

When the Dv50 of the carbon-based particles and/or the Dv50 of the silicon-based particles further satisfy the above range, the volume energy density of the battery can also be improved, the self-discharge coefficient of the battery can be improved, and the high-temperature storage performance of the battery can be improved.

By way of example, the Dv50 of the silicon-based particles and the Dv50 of the carbon-based particles in the negative electrode active coating layer can be measured using a laser particle sizer, for example, a Malvern Mastersizer 3000 laser particle size analyzer. In the present invention, "Dv50" is the particle size corresponding to a cumulative volume distribution of 50% when particles are arranged in ascending order in terms of particle size.

In some embodiments, the type of the carbon-based particles includes, but is not limited to, at least one of artificial graphite, natural graphite, mesocarbon microspheres, hard carbon and soft carbon.

In some embodiments, the negative electrode active coating layer further includes a conductive agent including, but not limited to, at least one of acetylene black, conductive carbon black, Ketjen black, conductive graphite, carbon nanotubes, conductive carbon fibers, and graphene. By further adding the conductive agent, the conductivity of the battery can be further improved, which in turn improves the rapid discharge capability of the battery.

A second aspect of the present invention provides a battery comprising any one of the negative electrode plates described above.

In some embodiments, the battery further comprises a separator, and the thickness c of the separator is 3 µm - 9 µm, and may be, for example, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, or any point value in a range consisting of two of the above point values. In an embodiment, the thickness c of the separator is 4 µm - 8 µm. Because of the silicon-carbon material with better sphericity in the negative electrode active coating layer, the thickness of the separator can be controlled within the above range, which can effectively reduce the battery thickness and make the lithium ion battery have a higher volume energy density. In addition, it is avoided that when the thickness of the separator is < 3 µm, the strength of the separator is too low, it is easier to puncture the separator by the silicon-based particles, which deteriorates the self-discharge and high-temperature storage performance of the battery, and a too thin separator is likely to lead to weak interface adhesion with the negative electrode active coating layer, which is prone to powder falling off the electrode plate.

By way of example, the method for measuring the thickness c of the separator may comprise the following steps: a lithium ion battery is disassembled, a separator is removed, soaked with a dimethyl carbonate solution and rinsed. After air-drying, the thickness of the separator is measured vertically at 10 positions respectively with a ten-thousandth micrometer, and then averaged to obtain the thickness c of the separator.

In the present invention, the type of the separator includes, but is not limited to, at least one of woven films, nonwoven films (nonwoven fabrics), microporous films, composite films, separator paper, rolled films, polyethylene microporous films, and polypropylene microporous membranes.

In some embodiments, the Raman spectrum of the negative electrode active coating layer has a first characteristic peak at 470 cm⁻¹ - 520 cm⁻¹, a second characteristic peak at 1300 cm⁻¹ - 1400 cm⁻¹ and a third characteristic peak at 1520 cm⁻¹ - 1620 cm⁻¹; the ratio I of the intensity of the first characteristic peak to the intensity of the third characteristic peak and c satisfy: 0.002 ≤ I/c ≤ 0.04. The value of I/c may be, for example, 0.002, 0.003, 0.004, 0.005, 0.008, 0.01, 0.015, 0.02, 0.025, 0.03, 0.035, 0.04, or any point value in a range consisting of two of the above point values. In an embodiment, I and c satisfy: 0.005 ≤ I/c ≤ 0.03. The higher the I value, the higher the proportion of the silicon-based particles in the negative electrode active coating layer at the side near the separator. A higher proportion of the silicon-based particles can reflect more silicon-based particles to a certain extent, therefore the risk of puncturing the separator increases, so it is necessary to increase the thickness c of the separator to prevent the separator from being punctured by the edges and corners or convex structures of the silicon-based particles, which will affect the performance of the battery. When the ratio I of the intensity of the first characteristic peak to the intensity of the third characteristic peak and the thickness c of the separator further satisfy the above range, the battery can also have a high volume energy density, and the high-temperature storage performance of the battery can be further improved and the degree of self-discharge of the battery can be further reduced.

In some embodiments, the battery further comprises an electrolyte; the electrolyte comprises fluoroethylene carbonate; and fluoroethylene carbonate in the electrolyte can form a thinner and dense SEI film on the surface of the silicon-based particles, which can alleviate the size growth of the silicon-based particles during cycling to a certain extent, and further improve the problems of self-discharge and high-temperature storage performance deterioration of the battery caused by the silicon-based particles.

In some embodiments, the mass content of the fluoroethylene carbonate (FEC) in the electrolyte is 0.1%-5%, and may be, for example, 0.1%, 0.2%, 0.5%, 1%, 1.5%, 2%, 2.5%, 3%, 3.5%, 4%, 4.5%, 5%, or any point value in a range consisting of two of the above point values. Furthermore, when the mass content of fluoroethylene carbonate in the electrolyte satisfies the above range, it is possible to avoid that when the content of fluoroethylene carbonate is < 0.1%, the improvement effect is not obvious, and when the content of FEC is > 5%, the viscosity of the electrolyte is too high, which reduces the conductivity of the electrolyte and affects the rapid discharge capability of the battery.

By way of example, the method for determining the fluoroethylene carbonate content in the electrolyte may comprise the steps of: dichloromethane standard solutions of fluoroethylene carbonate with concentrations of 0.5 µg/mL, 1 µg/mL, 2.5 µg/mL, 5 µg/mL, 20 µg/mL and 50 µg/mL are prepared respectively, and using a peak of quantitative ion chromatography at a mass-to-charge ratio m/z=62 in GC-MS (equipment parameters: a column flow rate of 1 mL/min, an injection temperature of 250°C, a split ratio of 20 : 1, DB-1701 gas chromatography column, an injection volume of 1 µL, a ion source temperature of 260°C, an ionization energy of 70 eV, a GC interface temperature of 270°C, an ionization mode of EI, and an acquisition mode of SIR mode), a standard curve is plotted with the area of the peak versus the concentration of the standard solution. Then a lithium ion battery is disassembled, an electrolyte is collected, and a certain amount of the electrolyte is sucked by a pipette, which is then formulated to a 1 µg/mL mixed solution with dichloromethane as a diluent, and the samples are continuously injected for 5 times. The mass content of FEC in the electrolyte is calculated according to the standard curve and the peak area at the mass-to-charge ratio m/z = 62.

It should be noted that the digital representations such as "first" and "second" in the present invention are only used to distinguish different materials or usage modes and do not represent the difference in order.

The present invention will be described in detail below by means of examples. The examples described in the present invention are only some, rather than all, of the examples of the present invention. Based on the examples in the present invention, all other examples obtained by those of ordinary skill in the art without involving creative effort belong to the scope of protection of the present invention.

In the following examples, unless otherwise specified, all the materials used are commercially available and analytically pure.

The following examples were used to describe the battery of the present invention.

### Example 1

A battery was prepared according to the following method:

### 1) Preparation of negative electrode plate

Silicon-based particles (silicon-carbon, a porous carbon deposited silicon material structure, having a sphericity of 0.9 and an average particle size D2 of 9 µm), artificial graphite (having an average particle size D1 of 12 µm), polyacrylic acid, sodium carboxymethyl cellulose, styrene-butadiene rubber, SuperP and carbon nanotubes were mixed in a ratio of 10 : 82 : 3 : 1.6 : 1.6 : 1.7 : 0.1, and deionized water was added to obtain a negative electrode slurry under the action of a vacuum stirrer. The negative electrode slurry was evenly coated on the surface of both sides of a negative electrode current collector with a thickness of 8 µm, and the areal density of the negative electrode slurry coated on the surface of the negative electrode current collector was 6 mg/cm². The negative electrode current collector coated with the negative electrode slurry was transferred to an oven at 80°C for drying for 12 h, and then subjected to rolling (controlling the compacted density to be 1.78 g/cm³) and slitting to obtain a negative electrode plate.

### 2) Preparation of positive electrode plate

Lithium cobalt oxide (LiCoO₂), polyvinylidene fluoride (PVDF), acetylene black and carbon nanotubes (CNTs) were mixed in a mass ratio of 96 : 2 : 1.5 : 0.5, N-methylpyrrolidone was added, and the mixture was stirred under the action of a vacuum stirrer until a uniform positive electrode slurry was formed. The positive electrode slurry was evenly coated on an aluminum foil with a thickness of 9 µm. The coated aluminum foil above was baked in an oven, then transferred to an oven at 120°C for drying for 8 h, and then subjected to rolling and slitting to obtain the required positive electrode plate. The size of the positive electrode plate is small than that of the negative electrode plate, and the reversible capacity per unit area of the positive electrode plate is 4% lower than that of the negative electrode plate.

### 3) Separator

A polyethylene separator with a thickness of 5 µm was selected.

### 4) Preparation of lithium ion battery

The positive electrode plate in step 2), the separator in step 3), and the negative electrode plate in step 1) were sequentially stacked to ensure that the separator was between the positive electrode plate and the negative electrode plate and functioned for isolation, and then wound to obtain a bare cell. The bare cell was placed in an aluminum-plastic film housing, and the electrolyte (1 mol/L LiPF₆ + EC/DMC (1:1; by volume) + 1 wt.% FEC) was injected into the dried bare cell, followed by procedures such as vacuum packaging, standing, formation, shaping, and sorting to obtain the required battery.

Test for performance parameters:

### i) Energy density test

The lithium ion batteries prepared in Examples and Comparative examples were subjected to an energy density test, and the specific test method was as follows:
a battery was charged at a constant current with a current density of 0.2C to 4.5 V, then charged at a constant voltage of 4.5 V to a cut-off current of 0.02C, left to stand for 10 min, then discharged at a constant current with a current density of 0.2C to 3.0 V, and left to stand for 10 min, and the first-cycle discharge capacity and the first-cycle discharge energy of the battery were recorded; and the battery was then charged at a constant current with a current density of 0.2C until the charge capacity reached half of the first-cycle discharge capacity; and after the cut-off, the battery was removed to measure the thickness, length and width of the battery, and the energy density of the battery = first-cycle discharge energy/(length × width × thickness).

### ii) Self-discharge test

The lithium ion batteries prepared in the examples and comparative examples were subjected to a self-discharge test, and the specific test method was as follows: the battery was charged at a constant current with a current density of 0.2C to 4.5 V, then charged at a constant voltage of 4.5 V to a cut-off current of 0.02C, and left to stand for 10 min, and then the open-circuit voltage V1 of the battery was recorded; and the battery was then left to stand for 24 h, and the open-circuit voltage V2 of the battery after standing was recorded. The degree of self-discharge of the battery k (mV/h) = (V1-V2)/24 (in mV/h).

### iii) Storage performance test

The lithium ion batteries prepared in the examples and comparative examples were subjected to a storage performance test, and the specific test method was as follows:
the battery was charged at a constant current with a current density of 0.2C to 4.5 V, then charged at a constant voltage of 4.5 V to a cut-off current of 0.02C, left to stand for 10 min, then discharged at a constant current with a current density of 0.2C to 3.0 V, and left to stand for 10 min, and the first-cycle discharge capacity of the battery was recorded; the battery was then charged at a constant current with a current density of 0.2C until the charge capacity reached half of the first-cycle discharge capacity; and after the cut-off, the battery was removed to measure the thickness of the battery, which was recorded as the thickness before storage; and the battery was then charged at a constant current with a current density of 0.2C to 4.5 V , then charged at a constant voltage of 4.5 V to a cut-off current of 0.02C, and then left to stand in a blasting oven at 60°C for 35 days. The thickness of the battery at the end of the standing was measured and recorded as the thickness after storage. The thickness expansion rate of the battery after 35 days of storage at 60°C = (thickness after storage - thickness before storage)/thickness before storage.

### iv) Cycling performance test

The lithium ion batteries prepared in examples and comparative examples were subjected to a cycling test, and the specific test method was as follows:
the battery was charged at a constant current with a current density of 2C to 4.5 V, then charged at a constant voltage of 4.5 V to a cut-off current of 0.05C, left to stand for 10 min, then discharged with a current density of 1.5C to 3.0 V, and left to stand for 10 min, and the discharge capacity of the battery at this time was recorded as an initial capacity; and the charge-discharge process described above was repeated until the constant-voltage charge process at the 500th cycle was completed, the battery was left to stand for 10 min, and then the battery was discharged at a current density of 1.5C to 3.0 V and left to stand for 10 min, and the discharge capacity of the battery at this time was recorded as the capacity after cycling. The cycling capacity retention rate = (capacity after cycling/initial capacity) × 100%.

### v) Rate discharge capability test

The lithium ion batteries prepared in the examples and comparative examples were subjected to a discharge rate capacity test, and the specific test method was as follows:
the battery was charged at a constant current with a current density of 0.2C to 4.5 V, then charged at a constant voltage of 4.5 V to a cut-off current of 0.02C, left to stand for 10 min, and then discharged at a current density of 0.2C and 1C respectively to 3.0 V, and the ratio of the capacity discharged at 1C to the capacity discharged at 0.2C is the discharge rate capability of the battery.

The example groups 1-2 and comparative examples 1-3 followed example 1-1, and the main differences were shown in table 1. The number (a) of the silicon-based particles in a region of 100 µm x 100 µm of the surface of the negative electrode active coating layer was changed in example group 1. The average sphericity (b) of the silicon-based particles was changed in example group 2. The values of a, b and a/b did not satisfy the protection ranges in comparative example 1. The number (a) of the silicon-based particles is too much in comparative example 2. The average sphericity (b) is too small in comparative example 3.

**Table 1**

| | a | b | a/b | Energy density Wh/L | k value of cell mV/h | Thickness expansion rate after 35 d of storage at 60°C % | 500T capacity retention rate % | Capacity ratio of 1C/0.2C |
|---|---|---|---|---|---|---|---|---|
| Example 1-1 | 9 | 0.9 | 10 | 841 | 0.025 | 5.10 | 93.7 | 96.3 |
| Example 1-2 | 1 | 0.9 | 1.11 | 826 | 0.021 | 5.03 | 93.9 | 96.5 |
| Example 1-3 | 50 | 0.9 | 55.56 | 868 | 0.054 | 5.96 | 92.5 | 94.3 |
| Example 1-4 | 35 | 0.9 | 38.89 | 852 | 0.031 | 5.56 | 93.1 | 95.5 |
| Example 2-1 | 9 | 0.67 | 13.43 | 839 | 0.057 | 6.33 | 92.2 | 93.1 |
| Example 2-2 | 9 | 0.98 | 9.18 | 843 | 0.011 | 5.00 | 93.9 | 96.6 |
| Example 2-3 | 9 | 0.85 | 10.59 | 840 | 0.039 | 6.02 | 92.6 | 93.8 |
| Example 2-4 | 50 | 0.75 | 66.67 | 861 | 0.066 | 6.84 | 92.1 | 92.7 |
| Example 2-5 | 50 | 0.67 | 74.63 | 859 | 0.217 | 11.45 | 81.8 | 90.4 |
| Compara tive example 1 | 0.2 | 0.5 | 0.40 | 760 | 0.581 | 13.91 | 80.2 | 96.8 |
| Compara tive example 2 | 55 | 0.9 | 61.11 | 869 | 0.233 | 10.02 | 83.4 | 89.2 |
| Compara tive example 3 | 9 | 0.5 | 18 | 842 | 0.672 | 16.17 | 78.3 | 93.7 |

As can be seen from table 1, in the present invention, by controlling the number (a) of the silicon-based particles on the surface of the negative electrode active coating layer and the average sphericity (b) of the silicon-based particles to satisfy 1 ≤ a/b ≤ 67, the self-discharge coefficient of the battery can be effectively reduced and the high-temperature storage performance of the battery can be improved while ensuring the higher volume energy density of the negative electrode plate.

Example group 3 follows example 1-1, and the main differences were shown in table 2. The compacted density of the negative electrode plate was changed in example group 3.

**Table 2**

| | Compacted density of negative electrode plate | Energy density Wh/L | k value of cell mV/h | Thickness expansion rate after 35 d of storage at 60°C % | 500T capacity retention rate % | Capacity ratio of 1C/0.2C |
|---|---|---|---|---|---|---|
| Example 1-1 | 1.78 | 841 | 0.025 | 5.10 | 93.7 | 96.3 |
| Example 3-1 | 1.25 | 820 | 0.021 | 5.09 | 94.0 | 96.4 |
| Example 3-2 | 1.9 | 859 | 0.033 | 5.96 | 92.1 | 92.0 |
| Example 3-3 | 1.15 | 757 | 0.020 | 5.08 | 94.1 | 96.4 |
| Example 3-4 | 1.95 | 863 | 0.097 | 10.07 | 35.8 | 74.1 |

As can be seen from table 2, in the present invention, by adding silicon-based particles with higher sphericity into the negative electrode active coating layer, the negative electrode plate can have a higher compacted density during rolling, and the volume energy density of the lithium ion battery can be further improved, such that the battery has both higher volume energy density and better rapid discharge capability.

Example group 4 follows example 1-1, and the main differences were shown in table 3. The mass content of the silicon-based particles, based on the total mass of the negative electrode active coating layer, was changed in example group 4.

**Table 3**

| | Mass content of silicon-based particles % | Energy density Wh/L | k value of cell mV/h | Thickness expansion rate after 35 d of storage at 60°C % | 500T capacity retention rate % | Capacity ratio of 1C/0.2C |
|---|---|---|---|---|---|---|
| Example 1-1 | 10 | 841 | 0.025 | 5.10 | 93.7 | 96.3 |
| Example 4-1 | 2.1 | 827 | 0.021 | 5.03 | 94.0 | 96.5 |
| Example 4-2 | 94.5 | 866 | 0.052 | 5.97 | 92.6 | 92.4 |
| Example 4-3 | 1 | 762 | 0.019 | 5.01 | 94.1 | 96.7 |
| Example 4-4 | 97 | 883 | 0.104 | 10.04 | 46.5 | 88.3 |

As can be seen from table 3, in the present invention, by controlling the mass content of the silicon-based material of the negative electrode plate, the volume energy density of the battery can be improved; in addition, it was avoided that when the content of the silicon-based particles is too high, the contents of a binder and a conductive agent in the negative electrode active coating layer were too small, which will affect the capacity retention rate and rate performance of the battery.

Example groups 5-6 follow example 1-1, and the main differences were shown in table 4. The average particle size (D1) of the carbon-based particles was changed in example group 5. The average particle size (D2) of the silicon-based particles was changed in example group 6.

**Table 4**

| | D1 | D2 | D1/D2 | Energy density Wh/L | k value of cell mV/h | Thickness expansion rate after 35 d of storage at 60°C % | 500T capacity retention rate % | Capacity ratio of 1C/0.2C |
|---|---|---|---|---|---|---|---|---|
| Example 1-1 | 12 | 9 | 1.33 | 841 | 0.025 | 5.10 | 93.7 | 96.3 |
| Example 5-1 | 8 | 8 | 1 | 837 | 0.022 | 5.96 | 92.1 | 95.2 |
| Example 5-2 | 20 | 9 | 2.22 | 842 | 0.024 | 5.09 | 93.8 | 92.5 |
| Example 5-3 | 23 | 9 | 2.56 | 843 | 0.023 | 5.03 | 93.9 | 87.4 |
| Example 6-1 | 12 | 4 | 3 | 839 | 0.021 | 6.07 | 92.9 | 96.4 |
| Example 6-2 | 20 | 20 | 1 | 838 | 0.057 | 6.45 | 91.5 | 91.8 |
| Example 6-3 | 12 | 23 | 0.52 | 835 | 0.669 | 16.85 | 81.4 | 89.1 |
| Example 6-4 | 12 | 2 | 6 | 822 | 0.021 | 10.52 | 77.9 | 96.5 |

As can be seen from table 4, in the present invention, by controlling the ranges of D1, D2 and the ratio D1/D2, the volume energy density of the battery can be further improved, and the battery can have lower self-discharge coefficient and better high-temperature storage performance. Moreover, on the one hand, it is possible to avoid that the particle size of the silicon-based particles or carbon-based particles is too small, which will increase the side reactions of the battery because of the too large specific surface, resulting in poorer high-temperature storage performance and capacity retention rate of the battery; on the other hand, it is possible to avoid that the particle size of the silicon-based particles or carbon-based particles is too large, which leads to the deterioration of battery rate performance. If the particle size of the silicon-based particles is too large, the k value and high-temperature storage performance of the cell will further deteriorate.

Example group 7 follows example 1-1, and the main differences were shown in table 5. The mass content of fluoroethylene carbonate (FEC) in the electrolyte was changed in example group 7.

**Table 5**

| | FEC content % | Energy density Wh/L | k value of cell mV/h | Thickness expansion rate after 35 d of storage at 60°C % | 500T capacity retention rate % | Capacity ratio of 1C/0.2C |
|---|---|---|---|---|---|---|
| Example 1-1 | 1 | 841 | 0.025 | 5.10 | 93.7 | 96.3 |
| Example 7-1 | 0.1 | 842 | 0.072 | 6.17 | 92.0 | 96.4 |
| Example 7-2 | 5 | 837 | 0.021 | 5.02 | 91.3 | 91.4 |
| Example 7-3 | 0.05 | 843 | 0.125 | 10.69 | 85.6 | 96.5 |

As can be seen from table 5, in the present invention, FEC was added into the electrolyte and the mass content of FEC in the electrolyte was controlled, which can alleviate the size growth of the silicon-based particles during cycling to a certain extent, and further improve the problems of self-discharge and high-temperature storage performance deterioration of the battery caused by the silicon-based particles.

Example groups 8-9 follow example 1-1, and the main differences were shown in table 6. In example group 8, by changing the addition amount of the silicon-based particles in the negative electrode active coating layer, the ratio I of the intensity of the first characteristic peak to the intensity of the third characteristic peak in the Raman spectrum of the negative electrode active coating layer was changed. The thickness (c) of the battery separator was changed in example group 9.

**Table 6**

| | I | c | I/c | Energy density Wh/L | k value of cell mV/h | Thickness expansion rate after 35 d of storage at 60°C % | 500T capacity retention rate % | Capacity ratio of 1C/0.2C |
|---|---|---|---|---|---|---|---|---|
| Example 1-1 | 0.1 | 5 | 0.02 | 841 | 0.025 | 5.10 | 93.7 | 96.3 |
| Example 8-1 | 0.01 | 5 | 0.002 | 833 | 0.022 | 5.04 | 94.0 | 96.4 |
| Example 8-2 | 0.2 | 5 | 0.04 | 850 | 0.051 | 5.88 | 92.9 | 94.7 |
| Example 8-3 | 0.3 | 5 | 0.06 | 867 | 0.129 | 10.01 | 84.6 | 89.8 |
| Example 8-4 | 0.005 | 5 | 0.001 | 762 | 0.019 | 5.00 | 94.2 | 96.5 |
| Example 9-1 | 0.1 | 3 | 0.033 | 854 | 0.069 | 6.76 | 91.3 | 96.5 |
| Example 9-2 | 0.1 | 9 | 0.011 | 786 | 0.020 | 5.01 | 94.1 | 93.2 |
| Example 9-3 | 0.1 | 2.5 | 0.04 | 861 | 0.747 | 18.33 | 83.5 | 96.6 |
| Example 9-4 | 0.2 | 3 | 0.067 | 852 | 0.208 | 11.22 | 85.4 | 94.1 |

As can be seen from table 6, in the present invention, by controlling the ratio range of the ratio I of the intensity of the first characteristic peak to the intensity of the third characteristic peak and the thickness c of the separator, the battery can also have a high volume energy density, and the high-temperature storage performance of the battery can be further improved and the degree of self-discharge of the battery can be further reduced. In addition, it is avoided that when the separator is too thin, the strength of the separator is lower, it is easier to puncture the separator by the silicon-based particles, which deteriorates the self-discharge and storage performance of the battery, and the use of a too thin separator is likely to lead to weak interface adhesion with the negative electrode coating layer, which in turn is prone to powder falling off the electrode plate.

The preferred embodiments of the present invention have been described in detail above; however, the present invention is not limited thereto. Within the technical concept of the present invention, various simple modifications can be made to the technical solution of the present invention, including the combination of various technical features in any other suitable way. These simple modifications and combinations should also be regarded as the content disclosed by the present invention and all fall within the scope of protection of the present invention.

## Claims

1. A negative electrode plate, **characterized in that** the negative electrode plate comprises a negative electrode current collector and a negative electrode active coating layer on a surface of at least one side of the negative electrode current collector, wherein the negative electrode active coating layer comprises silicon-based particles; the number of the silicon-based particles in a region of 100 µm x 100 µm of the surface of the negative electrode active coating layer is a, 1 ≤ a ≤ 50; the average sphericity of the silicon-based particles is b, 0.66 ≤ b ≤ 1; and
a and b satisfy: 1 ≤ a/b ≤ 67.

2. The negative electrode plate according to claim 1, **characterized in that** 2 ≤ a/b ≤ 47, preferably 2 ≤ a/b ≤ 23;
and/or, 2 ≤ a ≤ 40, preferably 2 ≤ a ≤ 20;
and/or, 0.85 ≤ b ≤ 1.

3. The negative electrode plate according to claim 1 or 2, **characterized in that** the Raman spectrum of the negative electrode active coating layer has a first characteristic peak at 470 cm⁻¹ - 520 cm⁻¹, a second characteristic peak at 1300 cm⁻¹ - 1400 cm⁻¹ and a third characteristic peak at 1520 cm⁻¹ - 1620 cm⁻¹; the ratio I of the intensity of the first characteristic peak to the intensity of the third characteristic peak is 0.001-0.2; and
preferably, I is 0.01-0.15.

4. The negative electrode plate according to claim 1 or 2, **characterized in that** the negative electrode plate has a compacted density of 1.25 g/cm³ - 1.9 g/cm³; and
preferably, the negative electrode plate has a compacted density of 1.4 g/cm³ - 1.8 g/cm³.

5. The negative electrode plate according to claim 1 or 2, **characterized in that** the mass content of the silicon-based particles in the negative electrode active coating layer is 2% - 95% based on the total mass of the negative electrode active coating layer;
preferably, the mass content of the silicon-based particles in the negative electrode active coating layer is 5% - 90% based on the total mass of the negative electrode active coating layer;
and/or, the silicon-based particles comprise at least one of elemental silicon, silicon-carbon, silicon-oxygen, and a silicon alloy; and
preferably, the silicon-based particles comprise silicon-carbon.

6. The negative electrode plate according to claim 1 or 2, **characterized in that** the negative electrode active coating layer further comprises carbon-based particles; the ratio D1/D2 of the average particle size D1 of the carbon-based particles to the average particle size D2 of the silicon-based particles is 1-5; and
preferably, D1/D2 is 1.1-2.5.

7. The negative electrode plate according to claim 6, **characterized in that** the average particle size D1 of the carbon-based particles is 8 µm - 20 µm;
and/or, the average particle size D2 of the silicon-based particles is 4 µm - 20 µm.

8. A battery, **characterized in that** the battery comprises the negative electrode plate according to any one of claims 1-7.

9. The battery according to claim 8, **characterized in that** the battery further comprises a separator, the separator having a thickness c of 3 µm - 9 µm;
preferably, the Raman spectrum of the negative electrode active coating layer has a first characteristic peak at 470 cm⁻¹ - 520 cm⁻¹, a second characteristic peak at 1300 cm⁻¹ - 1400 cm⁻¹ and a third characteristic peak at 1520 cm⁻¹ - 1620 cm⁻¹; the ratio I of the intensity of the first characteristic peak to the intensity of the third characteristic peak and c satisfy: 0.002 ≤ I/c ≤ 0.04; and more preferably, 0.005 ≤ I/c ≤ 0.03.

10. The battery according to claim 8, **characterized in that** the battery further comprises an electrolyte; the electrolyte comprises fluoroethylene carbonate; and
preferably, the mass content of fluoroethylene carbonate in the electrolyte is 0.1%-5%.
